# FASCICULE DE BREVET EUROPEEN

(11) **EP 0 540 408 B1**
(45) Date de publication et mention de la délivrance du brevet: **01.05.1996**
(21) Numéro de dépôt: 92402908.5
(22) Date de dépôt: 27.10.1992
(51) Int. Cl.: A01B 15/14

(54) **Perfectionnement aux dispositifs de liaison entre l'avant-train et l'arrière train d'une charrue permettant d'effectuer les différents réglages nécessaires de déport latéral et de dévers de pointe**
Verbesserung der Verbindungsvorrichtung zwischen dem Kopfstück und dem Rahmen eines Pfluges zur Regelung des Seitenversatzes und der Winkeleinstellung des Pfluges
Improvements to connecting devices between the headstock and the frame of a plough for making adjustments to the lateral offset and angular position of the plough

(30) Priorité: 28.10.1991 FR 9113234
(43) Date de publication de la demande: 05.05.1993
(73) Titulaire: HUARD S.A., F-44142 Chateaubriant Cédex (FR)
(72) Inventeur: Perret, Louis, F-44110 Chateaubriant (FR)
(74) Mandataire: Laget, Jean-Loup

(56) Documents cités:
- EP-A- 0 158 685
- EP-A- 0 284 470
- GB-A- 2 033 719
- GB-A- 2 166 932
- GB-A- 2 172 486

## Description

La présente invention est relative à des perfectionnements aux dispositifs de liaison entre l'avant-train et l'arrière-train d'une charrue permettant d'effectuer les différents réglages nécessaires de déport latéral et de dévers de pointe.

Par réglage de déport latéral, on entend le réglage de la position de la charrue par rapport au tracteur et donc par rapport a la roue arrière de celui-ci.

Comme, lors du labour, la roue arrière du tracteur se trouvant du côté vers lequel la terre est retournée, circule dans le fond du sillon précédemment tracé, le réglage du déport latéral a pour but de régler la largeur du travail du premier corps de la charrue, de façon que cette largeur soit égale à la distance séparant les autres corps les uns des autres.

Il existe de nombreux dispositifs permettant de déplacer transversalement une charrue parallèlement à elle même; on citera en particulier le brevet français EBERHARDT 1.493.619 qui décrit un dispositif de liaison entre l'avant-train et l'arrière-train d'une charrue au moyen de deux bielles parallèles et de même longueur, qui forment un parallélogramme déformable actionné par un vérin hydraulique: on obtient ainsi un déplacement de toute la charrue parallèlement à elle-même et donc un réglage du déport latéral.

Par réglage de dévers de pointe, on entend le réglage de la direction de l'axe de travail des corps de labour par rapport à la direction d'avancement du tracteur. Ce réglage est obtenu en faisant pivoter dans un sens ou dans l'autre l'axe de travail des corps de labour de façon qu'il soit parallèle a la direction d'avancement du tracteur.

Il est nécessaire, pour avoir un bon équilibrage de l'ensemble tracteur-charrue que la résultante des efforts de résistance engendrés par les corps au travail soit le plus près possible de l'axe longitudinal médian du tracteur.

Dans le brevet français HUARD 1.397.999 et son addition 94.822, on a décrit un dispositif permettant de régler à la fois le dévers de pointe et le déport latéral, par pivotement de l'arrière-train par rapport à l'avant-train au moyen d'une liaison par une bielle et un axe vertical à coulissement latéral afin de définir un centre virtuel de pivotement situé en arrière de la charrue.

Par la suite la demanderesse a fabriqué des charrues comportant un arrière-train attelé à l'avant-train par deux bielles, non pas parallèles comme dans le brevet EBERHARDT 1.493.619, mais convergeant vers l'arrière de façon à définir un point vertical de rotation situé aux environs du point d'application des forces de traction agissant sur les corps ; une telle disposition permet un réglage simultané du déport latéral et du dévers de pointe, au moyen d'un seul moyen de commande de déplacement des bielles. Ce dispositif donne entièrement satisfaction lorsque l'on emploie des tracteurs différents, mais ayant des distances entre les roues arrière moyennes, c'est-à-dire de l'ordre de 1,30 m à 1,40 m, mais présente des difficultés d'adaptation pour des distances entre les roues arrière d'un tracteur s'écartant trop de ces valeurs moyennes. En effet, lorsqu'on règle le déport latéral avec ces bielles - qui ne sont pas parallèles- on fait varier angulairement les corps de labour et donc le réglage de dévers, ce qui nuit à l'équilibre tracteur-charrue.

Dans le brevet allemand RABEWERK DE 1.168.148, on a décrit un dispositif de liaison entre l'arrière-train et l'avant-train d'une charrue au moyen de deux bielles convergentes, mais qui convergent vers l'avant en direction du point de convergence fictif des deux barres de traction par lesquelles l'avant-train de la charrue est tiré par le tracteur : cela permet de régler l'équilibrage de l'ensemble tracteur/charrue.

Dans le brevet français n° 79.25681 au nom de LEMKEN, on a décrit un dispositif de liaison de l'avant-train et de l'arrière-train d'une charrue au moyen de deux bielles qui convergent vers l'avant, comme dans le brevet RABEWERK DE n° 1.168.148. L'une des deux bielles étant de longueur variable, on peut faire varier l'orientation des corps de labour (réglage du dévers de pointe) mais cela désaligne les forces de traction, ce qui est corrigé au moyen d'une troisième bielle.

Le principal inconvénient de ce dispositif est que sa mise en oeuvre est particulièrement délicate, tout réglage d'une des bielles entraînant l'obligation d'un réglage de l'autre sans que l'utilisateur ne perçoive clairement dans quel sens il doit opérer. Il en résulte que lorsqu'il change de tracteur, l'agriculteur doit se livrer à un réglage délicat qui va lui demander de multiples essais suivis de corrections, ce qui rend, dans la pratique, un tel dispositif inutilisable.

Le brevet britannique RANSOMES GB n° 2.172.486 pui montre les caractéristiques du préambule de la revendication 1 constitue une combinaison des systèmes HUARD et LEMKEN précédemment examinés. Il comporte une liaison avant-train/arrière-train au moyen de trois bielles, une bielle principale et deux bielles auxiliaires. La bielle principale converge vers l'avant avec une des deux bielles auxiliaires et vers l'arrière avec l'autre bielle auxiliaire et cela en un point situé très en arrière de la charrue. L'inconvénient est le même que celui mentionné au sujet du brevet français LEMKEN n° 79.25681 : un tel dispositif est théoriquement réglable, mais sa mise en oeuvre est tellement délicate que les agriculteurs n'y arrivent pratiquement pas, de sorte que les charrues ainsi équipées sont pratiquement toujours mal réglées.

La présente invention a donc pour objet un dispositif de liaison entre l'avant-train et l'arrière-train d'une charrue au moyen de trois bielles, une bielle principale et deux bielles auxiliaires, permettant des réglages faciles et instantanés.

L'invention propose à cet effet une charrue multisocs comportant un dispositif de liaison entre d'une part un avant-train monté sur une tête d'attelage destinée à être attelée à l'attelage trois points d'un tracteur, et d'autre part un arrière-train supportant des corps de labour de charrue, lequel dispositif de liaison comporte une bielle principale de longueur fixe, articulée sur l'avant-train autour d'un premier axe de pivotement avant vertical et articulée sur l'arrière-train autour d'un axe de pivotement arrière vertical, et deux bielles auxiliaires de longueurs variables, les trois bielles étant disposées de telle façon que la bielle principale converge vers l'avant avec l'une des deux bielles auxiliares en un premier point de convergence virtuel (C₁) situé en avant de la charrue et que la bielle principale converge vers l'arrière avec l'autre bielle auxiliaire en un deuxième point de convergence virtuel (C₂) situé en arrière, caractérisée en ce que les deux bielles auxiliaires sont articulée d'une part sur l'avant-train autour de deux axes de pivotement avant verticaux supplémentaires distincts et d'autre part sur l'arrière-train autour d'un axe de pivotement vertical arrière unique, et en ce que le premier point de convergence virtuel (C₁) et le deuxième point de convergence virtuel (C₂) sont situés à égale ou sensiblement à égale distance de la droite joignant le centre dudit axe de pivotement vertical arrière unique et le centre dudit axe de pivotement arrière vertical d'articulation de la bielle principale sur l'arrière-train.

Cette disposition présente l'avantage que pour obtenir les réglages voulus de déport latéral en fonction de la distance entre les pneus des roues arrière du tracteur utilisé, il suffit de faire varier simultanément la longueur des deux bielles auxiliaires en raccourcissant l'une de la même longueur que l'on rallonge l'autre pour faire un réglage de déport latéral afin d'adapter la charrue à la distance entre les pneus des roues arrière d'un nouveau tracteur auquel doit être attelée la charrue.

Dans une réalisation particulièrement intéressante, il est prévu que les variations de longueur simultanées égales et en sens contraires des deux bielles auxiliaires soient obtenues par l'intermédiaire d'un jeu de cales de préférence en forme de bagues qui sont placées sur les deux bielles auxiliaires en trois positions possibles :
a- une cale sur chacune des deux bielles pour une distance entre pneus moyenne,
b- les deux cales sur la bielle auxiliaire extérieure, convergeant vers l'arrière, pour une distance entre pneus plus grande,
c- les deux cales sur la bielle auxiliaire intérieure, convergeant vers l'avant, pour une distance entre pneus plus petite.

Il pourra, bien entendu, être prévu de disposer de plusieurs jeux de paires de cales d'épaisseurs différentes pour avoir ainsi des réglages prédéterminés différents.

Selon l'invention, il pourra encore être prévu que la fonction de la bielle auxiliaire, convergeant vers l'avant, soit, lorsqu'on fait varier la longueur de cette seule bielle auxiliaire, de modifier à la fois le déport latéral et le dévers de pointe pour équilibrer en traction l'ensemble tracteur/charrue.

Dans la charrue selon l'invention, il pourra aussi être prévu que la largeur entre corps de labour soit variable.

Dans ce cas, la fonction de la bielle auxiliaire, convergeant vers l'arrière sera, lorsqu'on fera varier le longueur de cette seule bielle auxiliaire, de compenser angulairement, par pivotement de tout l'arrière-train, la variation angulaire de la direction des corps de labour pour les réaligner.

La largeur entre corps de labour pourra par exemple être modifiée si chaque corps de labour est monté à pivotement sur un pivot vertical et peut être fixé par une broche en plusieurs positions angulaires sur l'arrière-train de la charrue.

A titre d'exemple non limitatif et pour faciliter la compréhension de l'invention, on a représenté aux dessins annexés :
Figure 1, une vue de dessus d'une charrue réversible selon l'invention équipée de trois bielles, chaque bielle auxiliaire étant munie d'une cale, ce qui correspond à la position médiane;
Figure 2, une vue schématique correspondant à la figure 1 et illustrant les 3 positions possibles;
Figures 3 et 4, deux vues de détail illustrant les trois bielles dans leurs deux positions extrêmes.

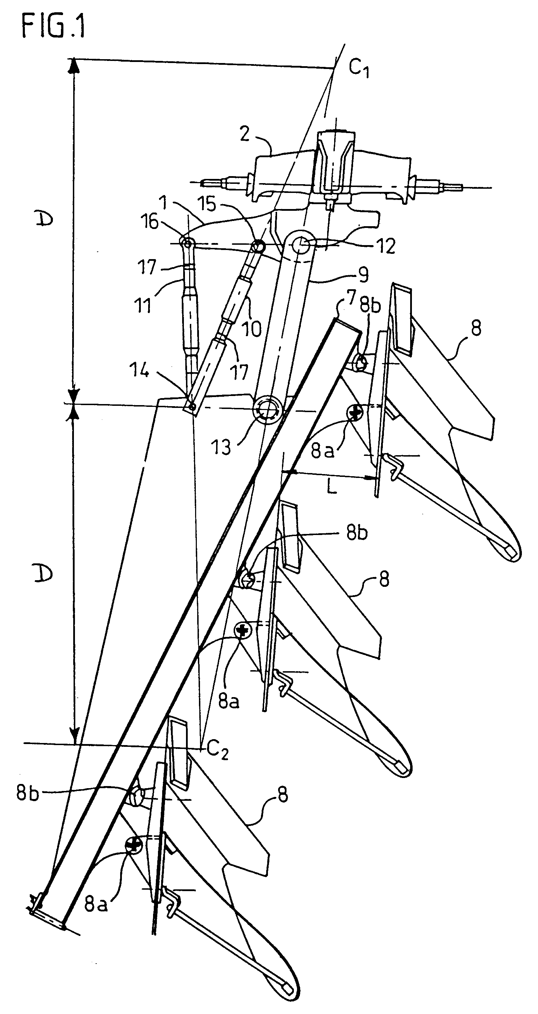

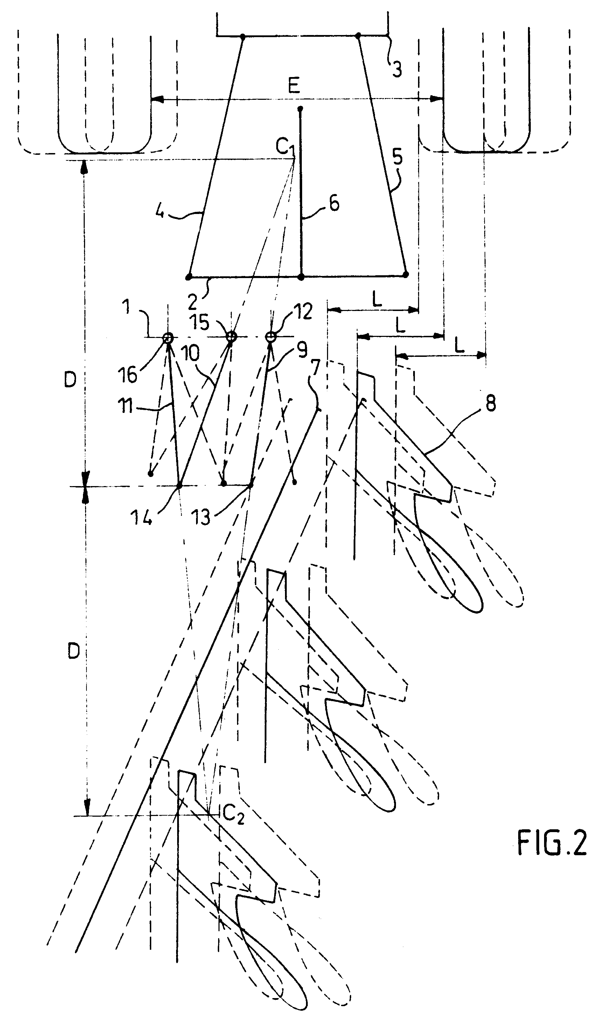

Comme cela est connu, l'avant-train 1 de la charrue réversible (ici une charrue trisocs) est monté tourillonnant dans une tête d'attelage 2 attelée aux barres de traction 4 et 5 et à la barre de poussée 6 (non représentées sur la figure 1, mais représentées schématiquement sur la figure 2) constituant l'attelage trois points du tracteur 3.

L'arrière-train 7 supportant les corps de labour droits 8 et gauches (non représentés) est relié à l'avant-train 1 par une bielle principale 9 orientée sensiblement dans la direction d'avancement et par deux bielles auxiliaires réglables 10 et 11 décalées angulairement et en sens inverse l'une de l'autre par rapport à la bielle principale 9.

Cette charrue est une charrue à largeurs multiples, c'est-à-dire que l'on peut faire varier la largeur entre les corps de labour.

Dans les charrues dites "a largeur variable" telle par exemple que celle décrite au brevet français n° 82.04694, les corps de labour sont portés par des supports de corps pouvant pivoter chacun autour d'un axe vertical respectif porté par une poutre porteuse oblique et on fait varier la distance entre les corps de labour (et donc la largeur des bandes de terre labourées) en faisant pivoter la poutre porteuse, tout en maintenant l'orientation des corps de labour au moyen d'un parallélogramme déformable. Dans une telle charrue, le mouvement de rotation de la poutre porteuse est accompagné d'un déplacement latéral de celle-ci pour positionner correctement le premier corps de labour. On obtient ainsi, par la mise en oeuvre d'un seul vérin, un mouvement combiné au cours duquel la distance séparant les corps de labour varie automatiquement, la position du premier corps de labour s'adaptant, également automatiquement, à la distance entre les corps de labour.

Dans la charrue représentée, il est possible de modifier la distance entre les corps de labour, mais cela ne se fait pas de façon automatique et continue, cela se fait manuellement, corps de labour par corps de labour; cette charrue est dite "à largeurs multiples" et non pas "à largeur variable".

Cette largeur de travail L entre deux corps de labour 8 peut être modifiée, d'une façon connue (par exemple par le GB 2 166 932 de DOWDESWELL), par rotation de chaque corps de labour autour d'un pivot vertical 8a et par fixation par une broche 8b pour différentes largeurs entre corps de labour.

On peut ainsi modifier la largeur entre corps de labour pour s'adapter au mieux au type de sol et à la profondeur de travail, les largeurs de travail par corps de labour les plus courantes étant de 30, 35 ou 40 cm.

Mais avec un tel dispositif, lorsqu'on opère une rotation de chacun des corps de labour, ceux-ci se trouvent désaxés par rapport à la direction d'avancement du tracteur 3: il faut donc disposer d'un moyen pour compenser cette variation angulaire.

Cette compensation est obtenue par la bielle auxiliaire réglable 11 dont la fonction est de compenser angulairement la variation angulaire des corps de labour provoquée par le changement d'une largeur à une autre.

La fonction de la bielle auxiliaire réglable 10 est de modifier -en travail- par une seule manoeuvre, à la fois le déport latéral et le dévers de pointe pour obtenir le meilleur équilibre tracteur/charrue.

La bielle 9 est appelée bielle principale parce que c'est elle qui encaisse l'essentiel de l'effort de traction. Elle est articulée par son extrémité avant sur l'avant-train 1 autour d'un axe de pivotement avant vertical 12 et par son extrémité arrière sur l'arrière-train 7 autour d'un axe de pivotement arrière vertical 13.

Les bielles auxiliaires 10 et 11 sont articulées sur l'arrière-train 7 par leurs extrémités arrière sur un axe de pivotement arrière vertical commun 14 (ou sur deux axes concentriques). L'extrémité avant de la bielle auxiliaire 10 est articulée sur l'avant-train 1 autour d'un axe de pivotement avant vertical 15 distant latéralement de l'axe de pivotement avant vertical 12.

L'extrémité avant de la bielle auxiliaire 11 est articulée sur l'avant-train 1 autour d'un axe de pivotement avant vertical 16 distant latéralement des axes de pivotement avant verticaux 12 et 15.

Les axes de pivotement arrière verticaux 13, 14 d'une part et les axes de pivotement avant verticaux 12, 15, 16 d'autre part sont disposés de telle façon que le point de convergence avant C₁ (premier point de convergence virtuel) des bielles 9 et 10 et le point de convergence arrière C₂ (deuxième point de convergence virtuel) des bielles 9 et 11 soient à la même distance D de la droite joignant les centres des axes de pivotement arrière verticaux 13 et 14.

Cette disposition permet d'adapter, d'une façon très simple, le corps de labour avant de la charrue à la distance E entre les pneus du tracteur 3.

A cet effet, les bielles auxiliaires 10 et 11 sont construites de telle façon que l'on utilise en permanence deux cales 17 (en forme de bague) d'égale épaisseur dont une est montée sur chacune des bielles auxiliaires 10 et 11 pour une distance E entre les pneus moyenne (1,30m à 1,40m), telle que représentée sur les figures 1 et 2 en trait plein.

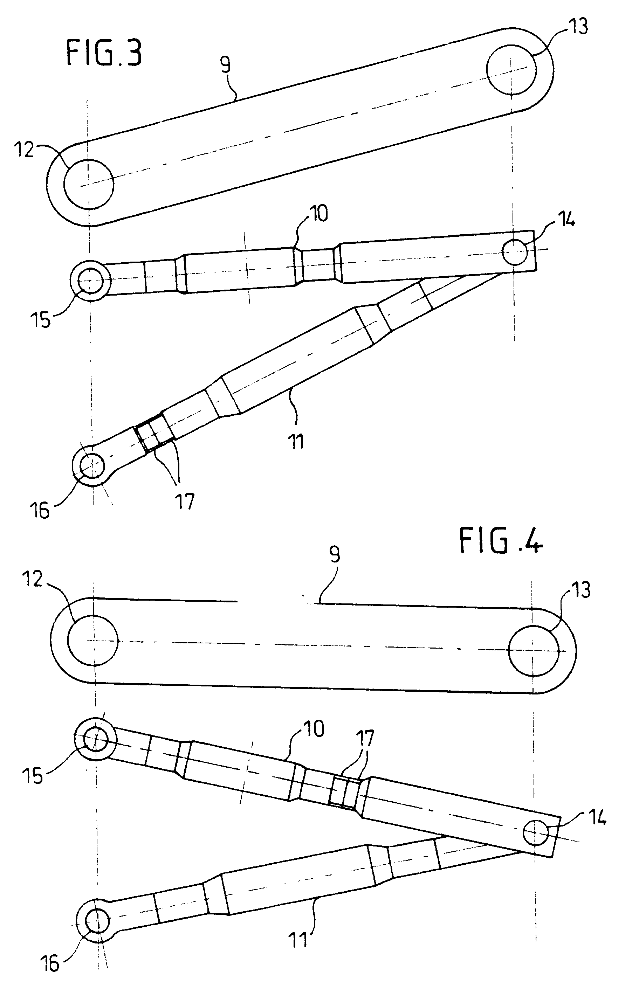

Lorsque la distance E entre les pneus est plus grande (1,50 m à 1,60 m, traits pointillés longs sur la figure 2), les deux cales 17 sont montées sur la bielle auxiliaire extérieure 11 -figure 3-, ce qui a pour effet de déporter, parallèlement à eux-mêmes, les corps de labour 8 pour mettre le corps de labour avant approximativement à la même distance L du pneu du tracteur 3 que la largeur L entre corps de labour.

Lorsque la distance E entre les pneus est plus petite (1m à 1,20m, traits pointillés courts sur la figure 2), les deux cales 17 sont montées sur la bielle auxiliaire intérieure 10 -figure 4- pour déporter, parallèlement à eux-mêmes, les corps de labour 8 .

Ce réglage s'effectue en général, une fois pour toute, à la mise en route de la charrue pour l'adapter grossièrement à la distance E entre les pneus du tracteur 3. Les réglages d'équilibrage qui sont fonction de la résistance du sol et de la profondeur de travail, se font ensuite si nécessaire, par une manoeuvre unique sur la bielle auxiliaire intérieure 10.

En résumé, on fait varier la longueur de la seule bielle auxiliaire 11 lorsque l'on veut compenser angulairement, par pivotement de tout l'arrière-train 7, la variation angulaire de la direction des corps de labour provoquée par leur pivotement autour de leur pivot vertical 8a respectif pour obtenir une nouvelle largeur de travail L; on fait varier la longueur de la seule bielle auxiliaire 10 lorsque l'on veut (une fois la largeur de travail L définie) modifier à la fois le déport latéral et le dévers de pointe ; on fait varier simultanément la longueur des deux bielles auxiliaires 10 et 11 en raccourcissant l'une de la même longueur que l'on rallonge l'autre pour faire un réglage de déport latéral afin d'adapter la charrue à une nouvelle distance E entre les pneus du tracteur 3.

Bien évidemment, on peut employer des paires de cales 17 d'épaisseurs différentes et avoir ainsi des réglages prédéterminés différents.

## Revendications

1. Charrue multisocs comportant un dispositif de liaison entre d'une part un avant-train (1) monté sur une tête d'attelage (2) destinée à être attelée à l'attelage (4, 5, 6) trois points d'un tracteur (3), et d'autre part un arrière-train (7) supportant des corps de labour de charrue, lequel dispositif de liaison comporte une bielle principale (9) de longueur fixe, articulée sur l'avant-train (1) autour d'un premier axe de pivotement avant vertical (12) et articulée sur l'arrière-train (7) autour d'un axe de pivotement arrière vertical (13), et deux bielles auxiliaires (10, 11) de longueurs variables, les trois bielles (9, 10, 11) étant disposées de telle façon que la bielle principale (9) converge vers l'avant avec l'une (10) des deux bielles auxiliaires (10, 11) en un premier point de convergence virtuel (C₁) situé en avant de la charrue et que la bielle principale (9) converge vers l'arrière avec l'autre bielle auxiliaire (11) en un deuxième point de convergence virtuel (C₂) situé en arrière de la charrue, caractérisée en ce que les deux bielles auxiliaires (10, 11) sont articulées d'une part sur l'avant-train (1) autour de deux axes de pivotement avant verticaux (15, 16) supplémentaires distincts et d'autre part sur l'arrière-train (7) autour d'un axe de pivotement vertical arrière unique (14), et en ce que le premier point de convergence virtuel (C₁) et le deuxième point de convergence virtuel (C₂) sont situés à égale ou à sensiblement égale distance de la droite joignant le centre dudit axe de pivotement vertical arrière unique (14) et le centre dudit axe de pivotement arrière vertical (13) d'articulation de la bielle principale (9) sur l'arrière-train (7).

2. Charrue selon la revendication 1, caractérisé en ce que les variations de longueur simultanées égales et en sens contraires des deux bielles auxiliaires (10, 11) sont obtenues par l'intermédiaire d'un jeu de cales (17) de préférence en forme de bague, qui sont placées sur les deux bielles auxiliaires (10, 11) en trois positions possibles :
a- une cale (17) sur chacune des deux bielles auxiliaires (10, 11) pour une distance (E) entre pneus moyenne,
b- les deux cales (17) sur la bielle auxiliaire extérieure (11), convergeant vers l'arrière, pour une distance (E) entre pneus plus grande,
c- les deux cales (17) sur la bielle auxiliaire intérieure (10) convergeant vers l'avant, pour une distance (E) entre pneus plus petite.

3. Charrue selon la revendication 2, caractérisée en ce que l'on dispose de plusieurs jeux de paires de cales (17) d'épaisseurs différentes.

4. Charrue selon l'une des revendications 1 à 3, dans laquelle la fonction de la bielle auxiliaire (10), convergeant vers l'avant, est, lorsqu'on fait varier la longueur de cette seule bielle auxiliaire (10), de modifier à la fois le déport latéral et le dévers de pointe pour équilibrer en traction l'ensemble tracteur/charrue.

5. Charrue selon l'une des revendications 1 à 4, caractérisée en ce que la largeur (L) entre corps de labour est variable.

6. Charrue selon la revendication 5, dans laquelle la fonction de la bielle auxiliaire (11), convergeant vers l'arrière, est, lorsqu'on fait varier la longueur de cette seule bielle auxiliaire (11), de compenser angulairement, par pivotement de tout l'arrière-train (7), la variation angulaire de la direction des corps de labour pour les réaligner.

7. Charrue selon la revendication 5 ou 6, caractérisée en ce que chaque corps de labour est monté à pivotement sur un pivot vertical (8a) et peut être fixé par une broche (8b) en plusieurs positions angulaires sur l'arrière-train (7).

## Claims

1. A multi-furrow plough comprising a connecting device between firstly a fore-carriage (1) mounted on a coupler head (2) intended to be linked to the three-point linkage (4, 5, 6) of a tractor (3), and secondly a rear carriage (7) supporting ploughing bodies of the plough, which connecting device comprises a main connecting-rod (9) of fixed length, articulated to the fore-carriage (1) around a first front vertical swivel pin (12) and articulated to the rear carriage (7) around a rear vertical swivel pin (13), and two auxiliary connecting-rods (10, 11) of variable lengths, the three connecting-rods (9, 10, 11) being arranged such that the main connecting-rod (9) converges towards the front with one (10) of the two auxiliary connecting-rods (10, 11) at a first virtual point of convergence (C₁) located in front of the plough and that the main connecting-rod (9) converges towards the rear with the other auxiliary connecting-rod (11) at a second virtual point of convergence (C₂) located behind the plough, characterised in that the two auxiliary connecting-rods (10, 11) are articulated firstly to the fore-carriage (1) about two additional distinct front vertical pivot axes (15, 16) and secondly to the rear carriage (7) about a single rear vertical swivel pin (14), and in that the first virtual point of convergence (C₁) and the second virtual point of convergence (C₂) are located at equal or at substantially equal distance from the straight line joining the centre of said single rear vertical swivel pin (14) and the centre of said rear vertical swivel pin (13) for articulating the main connecting-rod (9) on the rear carriage (7).

2. A plough according to Claim 1, characterised in that the simultaneous equal variations in length in the opposite directions of the two auxiliary connecting-rods (10, 11) are obtained by means of a set of shims (17) preferably in the form of a ring, which are placed on the two auxiliary connecting-rods (10, 11) in three possible positions:
a - one shim (17) on each of the two auxiliary connecting-rods (10, 11) for an average distance (E) between tyres,
b - the two shims (17) on the outer auxiliary connecting-rod (11), converging towards the rear, for a larger distance (E) between tyres,
c - the two shims (17) on the inner auxiliary connecting-rod (10) converging towards the front, for a smaller distance (E) between tyres.

3. A plough according to Claim 2, characterised in that several pairs of shims (17) of different thicknesses are provided.

4. A plough according to one of Claims 1 to 3, in which the function of the auxiliary connecting-rod (10), converging towards the front, when the length of this single auxiliary connecting-rod (10) is varied, is to modify both the lateral offset and the inclination of the point in order to balance the tractor/plough assembly in traction.

5. A plough according to one of Claims 1 to 4, characterised in that the width (L) between the ploughing bodies is variable.

6. A plough according to Claim 5, in which the function of the auxiliary connecting-rod (11), converging towards the back, when the length of this single auxiliary connecting-rod (11) is varied, is to compensate angularly, by pivoting the entire rear carriage (7), for the angular variation in the direction of the ploughing bodies in order to realign them.

7. A plough according to Claim 5 or 6, characterised in that each ploughing body is mounted to pivot on a vertical pivot (8a) and can be fixed by a pin (8b) in several angular positions on the rear carriage (7).

## Patentansprüche

1. Mehrschariger Pflug mit einer Einrichtung zur Verbindung zwischen einem Kopfstück (1), das auf einem Kupplungskopf (2) befestigt ist, der seinerseits zur Ankoppelung an eine Dreipunktkupplung (4,5,6) eines Zugwagens (3) dient, und einem Rahmen (7), der die Pflugkörper des Pflugs abstützt, wobei die Verbindungseinrichtung eine Hauptstange (9) fester Länge, die am Kopfstück (1) um eine erste vertikale Gelenkachse (12) und am Rahmen (7) um eine hintere vertikale Drehachse (13) verschwenkbar angelenkt ist, sowie zwei Hilfsstangen (10,11) veränderlicher Länge aufweist und diese drei Stangen (9,10,11) derart angebracht sind, daß die Hauptstange (9) nach vorne mit der einen (10) der beiden Hilfsstangen (10,11) in einem ersten virtuellen Konvergenzpunkt (C₁), der vor dem Pflug liegt, und nach hinten mit der anderen Hilfsstange (11) in einem zweiten virtuellen Konvergenzpunkt (C₂), der hinter dem Pflug liegt, zusammenläuft, dadurch gekennzeichnet, daß die beiden Hilfsstangen (10,11) am Kopfstück (1) um zwei vordere, zusätzliche, getrennte, vertikale Schwenkachsen (15, 16) und am Rahmen (7) um eine einzige hintere vertikale Schwenkachse (14) verschwenkbar befestigt sind, und daß der erste virtuelle Konvergenzpunkt (C₁) und der zweite virtuelle Konvergenzpunkt (C₂) in gleichem oder im wesentlichen gleichem Abstand von der Gerade angeordnet sind, die den Mittelpunkt der hinteren, einzigen, vertikalen Schwenkachse (14) und den Mittelpunkt der hinteren vertikalen Drehachse (13) der Hauptstange (9) am Rahmen (7) verbindet.

2. Pflug nach Anspruch 1, dadurch gekennzeichnet, daß man die gleichzeitigen, gleich großen und gegenläufigen Längenänderungen der beiden Hilfsstangen (10,11) durch Verwendung eines Satzes von bevorzugt ringförmigen Zwischenstücken (17) erhält, die auf den beiden Hilfsstangen (10,11) in drei möglichen Lagen angebracht sind:
a - ein Zwischenstück (17) auf jeder der beiden Hilfsstangen (10,11) für einen mittleren Abstand (E) zwischen den Reifen;
b - die beiden Zwischenstücke (17) auf dem äußeren Hilfsträger (11), der nach hinten konvergiert, für einen größten Abstand (E) zwischen den Reifen,
c - die beiden Zwischenstücke (17) auf dem inneren Hilfsträger (10), der nach vorne konvergiert, für einen kleinsten Abstand (E) zwischen den Reifen.

3. Pflug nach Anspruch 2, dadurch gekennzeichnet, daß man mehrere Sätze von Zwischenstück-Paaren (17) unterschiedlicher Dicken einsetzt.

4. Pflug nach einem der Ansprüche 1 bis 3, bei dem die Funktion der Hilfsstange (10), die nach vorne konvergiert, darin besteht, daß, wenn man die Länge dieser einzelnen Hilfsstange (10) verändert, gleichzeitig der seitliche Versatz und die Spitzenanstellung verändert werden, um die Einheit Zugwagen/Pflug bei Zug im Gleichgewicht zu halten.

5. Pflug nach einem der Ansprüche 1 bis 4, dadurch gekennzeichnet, daß die Länge (L) zwischen den Pflugkörpern veränderlich ist.

6. Pflug nach Anspruch 5, bei dem die Funktion der Hilfsstange (11), die nach hinten konvergiert, darin besteht, daß, wenn man die Länge dieser einzelnen Hilfsstange (11) ändert, durch eine Verschwenkung des gesamten Rahmens (7) in Winkelrichtung zur Nachrichtung der Pflugkörper die Winkeländerung in der Ausrichtung der Pflugkörper kompensiert wird.

7. Pflug nach Anspruch 5 oder 6, dadurch gekennzeichnet, daß jeder Pflugkörper verschwenkbar auf einer vertikalen Achse (8a) angebracht ist und durch eine Welle (8b) in mehreren Ringlagen auf dem Rahmen (7) fixiert werden kann.
